# EUROPEAN PATENT APPLICATION

(11) **EP 1 203 896 A2**
(43) Date of publication of application: **08.05.2002**
(21) Application number: 01309295.2
(22) Date of filing: 01.11.2001
(51) Int. Cl.: F16D 65/78

(54) **Driveline Cooling System**

(30) Priority: 02.11.2000 US 705243
(71) Applicant: Meritor Heavy Vehicle Technology LLC, Troy, Michigan 48084 (US)
(72) Inventor: Bell, Dale K., Ortonville, Michigan 48462 (US); Hayes, Brian D., Newark, Ohio 43055 (US); Baldwin, Michael D., Pickerington, Ohio 43147 (US); Martin III, Robert J., Newark, Ohio 43055 (US)
(74) Representative: Jones, John Bryn

(57) **Abstract**

A method and apparatus for cooling driveline components such as brakes, axles, transmission, etc. incorporates a valve (26,64) communicating with a sensor (24,62) associated with a component (22,60). When a predetermined temperature is exceeded at the component, the valve is opened. When predetermined lower temperature is achieved, air flow is terminated. The valve allows air to flow from an air reservoir (30) which has typically been utilized to supply air to the air brake system (50), and for other needs on the vehicle. The use of the air brake reservoir ensures a large volume of air to be supplied to the component being cooled.

## Description

### BACKGROUND OF THE INVENTION

This invention relates to a system and a method of providing cooling air flow to drive train or driveline components such as brakes, axles, etc.

Vehicle components are subject to harsh operational environments, and extreme challenges. As an example, the brakes in a vehicle are subject to heat generation due to frequent stops or long down grade slopes in many vehicle applications. Examples of the type of vehicle which provides extreme challenges to the brakes would be operation of buses which stop frequently. Also, vehicles such as a truck on a long down hill gradient result in high heat. Vehicles subject to frequent stopping and low speed operation have such brake heat problems.

Other drive train components such as the axle or transmission are also subject to cooling challenges. With modern vehicles, the amount of horsepower, and thus the heat generated in those components is ever increasing. As the internal heat increases, the cooling challenge also increases.

While various cooling systems have been utilized, they either have not been capable of providing sufficient quantities of cooling at appropriate times or present too much demand on other systems such as the engine cooling system..

Thus, a system which directs cooling air from a relatively large reservoir at appropriate times is desirable.

### SUMMARY OF THE INVENTION

In disclosed embodiments of this invention, a system on a vehicle drive train is provided with an air cooling system which draws its cooling air from the air brake air reservoir. The air brake air reservoir provides a large reservoir of air which the compressor continually maintains at high pressure which could be used for cooling as a second priority to braking. Thus, the inventive system ensures that sufficient air flow will be available. Moreover, a temperature sensor senses the temperature of the component, and actuates a control when a particular temperature is reached such that the cooling air is only directed to the component upon the component reaching a predetermined temperature.

The component may be a brake, an axle, a transmission, or other components within a vehicle drive train.

These and other features of the present invention can be best understood from the following specification and drawings, the following of which is a brief description.

### BRIEF DESCRIPTION OF THE DRAWINGS

Figure 1 is a schematic of a system incorporated into a vehicle brake.
Figure 2 shows a preferred distribution nozzle arrangement.
Figure 3 shows an inventive system incorporated into an axle, schematically.

### DETAILED DESCRIPTION OF A PREFERRED EMBODIMENT

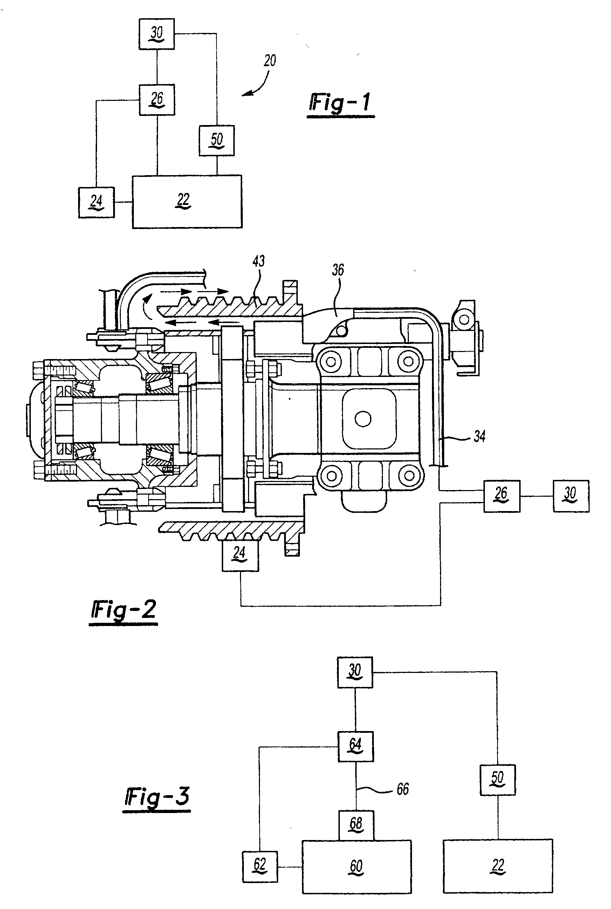

Figure 1 schematically shows a system 20 for cooling a brake 22. A temperature sensor 24 senses the temperature within the brake and communicates with a valve 26 associated with an air reservoir 30 which is preferably part of the air brake system. The valve 26 may be a solenoid controlled valve. As known, the air reservoir 30 stores compressed air in a relatively large volume tank which is already part of most heavy vehicles.

A valve is in communication with flexible supply line 34, leading to a nozzle 36 which is directed into the interior of the brake. As shown in Figure 2, the nozzle 36 extends to an outlet position within the brake housing 43. The positioning of the nozzle may be other than that shown in this figure. Further, the temperature sensor 24 is also shown near the brake 22.

When the temperature sensor senses that a predetermined temperature has been passed by the brake 22, then the temperature sensor sends a signal to the solenoid 26. The solenoid 26 opens allowing compressed air to flow through the nozzle 42 and onto the brakes to cool the brakes. When brake temperature declines to predetermined acceptable level, air flow is terminated. The present invention improves upon prior art brake cooling systems in that the actuation is temperature responsive, and in that the air supply is taken from the air reservoir 30 which is a very large volume tank already incorporated into the vehicle. As shown schematically in this figure, the air reservoir is also connected at 50 to the brake to supply compressed air for actuation for the brake, as known.

Activation of air flow as described here is from a temperature sensor, however, activation could be from temperature, brake pressure interaction or brake pressure/vehicle speed interaction, or other means.

As shown in Figure 3, in a second embodiment, the component 60 is an axle or a transmission. The system will actuate itself in the same fashion, with the temperature sensor 62 actuating the valve 64 when a predetermined temperature is passed. Again, air will be delivered through a pipe 66 to the nozzle 68. As shown schematically, the air reservoir 30 supplies the air for the brake 22 as in the prior embodiment.

In sum, the present invention provides a temperature sensor, which may be any type of known temperature sensor appropriate for the particular driveline components. When a preset temperature has been reached, the system actuates cooling air flow. The cooling air flow comes from the air reservoir for the brake system, and is thus drawn from a very large reservoir.

Although preferred embodiments of this invention have been disclosed, a worker in this art would recognize that many modifications would come within the scope of this invention. Thus, the following claims should be studied to determine the true scope and content of this invention.

## Claims

1. A cooling system (20) for a vehicle driveline component comprising:
a vehicle driveline component subject to heat during operation;
a temperature sensor (24; 62) for sensing the temperature of a portion of said driveline component;
a valve (26; 64) communicating with said temperature sensor and operable to open when said temperature sensor senses a predetermined temperature;
an air reservoir (30) communicating with said valve, said air reservoir also communicating with a vehicle air brake system (50) to supply air to said air brake system, air flowing through said valve communicating with said driveline component such that if said predetermined temperature is reached air is delivered to said driveline component to cool said driveline component and shut air supply off when predetermined lower component temperature is reached.

2. A system as set forth in Claim 1, wherein said driveline component is a vehicle brake (22).

3. A system as set forth in Claim 1, wherein said driveline component is an axle.

4. A system as set forth in Claim 1, wherein said driveline component is a transmission.

5. A system as set forth in any preceding Claim, wherein air exits a nozzle (36; 68) to be delivered to said driveline component.

6. A method of cooling a driveline component comprising the steps of:
1) providing a driveline component subject to heat during operation of a vehicle, and providing a temperature sensor (24; 62) associated with said driveline component, said temperature sensor communicating sending a signal for operating a valve (26; 64), said valve selectively being connected to deliver compressed air from an air reservoir (30) for supplying air to a vehicle air brake system (50), said valve being operable to selectively deliver air from said reservoir to said driveline component;
2) monitoring the temperature of said driveline component with said sensor; and
3) delivering air from said air reservoir by opening said valve when said sensor determines a predetermined temperature has been exceeded by said driveline component and stopping air flow when a low temperature is reached.

7. A method as set forth in Claim 6, wherein said driveline component is a vehicle brake (22).

8. A method as set forth in Claim 6, wherein said driveline component is an axle.

9. A method as set forth in Claim 8, wherein said driveline component is a vehicle axle.

10. A method as set forth in Claim 6, wherein said driveline component is a transmission.
